# EUROPÄISCHE PATENTSCHRIFT

(11) **EP 2 478 203 B1**
(45) Veröffentlichungstag und Bekanntmachung des Hinweises auf die Patenterteilung: **05.06.2013**
(21) Anmeldenummer: 10747445.4
(22) Anmeldetag: 19.08.2010
(51) Int. Cl.: F02M 25/07, F01N 3/022, F01N 3/021

(54) **HOHLKÖRPER ZUM ABFANGEN VON PARTIKELN IN EINER ABGASLEITUNG**
HOLLOW BODY FOR CAPTURING PARTICLES IN AN EXHAUST GAS LINE
CORPS CREUX POUR LA CAPTURE DE PARTICULES DANS UNE CONDUITE DE GAZ D'ÉCHAPPEMENT

(30) Priorität: 14.09.2009 DE 102009041093
(43) Veröffentlichungstag der Anmeldung: 25.07.2012
(73) Patentinhaber: Emitec Gesellschaft für Emissionstechnologie mbH, 53797 Lohmar (DE)
(72) Erfinder: WIERES, Ludwig, 51491 Overath (DE); SITTIG, Joachim, 51503 Rösrath (DE); KOTTHOFF, Hubertus, 53809 Ruppichteroth (DE)
(74) Vertreter: Rössler, Matthias
(86) Internationale Anmeldenummer: PCT/EP2010/062074
(87) Internationale Veröffentlichungsnummer: WO 2011/029705

(56) Entgegenhaltungen:
- DE-A1- 3 833 957
- DE-C1- 4 130 178
- JP-A- 8 291 772

## Beschreibung

Die Erfindung betrifft einen Hohlkörper zum Abfangen von Partikeln in einer Abgasleitung, der insbesondere im Übergangsbereich von einer Abgasleitung hin zu einer Abgasrückführleitung angeordnet ist, um zu verhindern, dass Partikel aus der Abgasleitung in die Abgasrückführleitung gelangen. Derartige Hohlkörper werden insbesondere in Abgassystemen von (mobilen) Verbrennungskraftmaschinen eingesetzt.

Bei der Abgasbehandlung von Abgasen mobiler Verbrennungskraftmaschinen, wie z. B. Otto- und Diesel-Motoren, ist man heute bestrebt, Abgase derart aufzubereiten, dass diese möglichst frei von Schadstoffen an die Umwelt abgegeben werden können. Diese Abgasbehandlung kann z. B. dadurch geschehen, dass die Abgase in einem Katalysator und/oder in einem Filter gereinigt werden. Es ist auch bekannt einen Teil des produzierten Abgases wieder in die Verbrennungskraftmaschine rückzuführen, um insbesondere eine Reduzierung der Menge an Stickstoffoxid-Verbindungen im Abgas zu erreichen. Das bedeutet, dass ein Teil der Abgase aus der Abgasleitung entnommen und über eine Abgasrückführleitung zurück zur Ansaugseite der Verbrennungsmaschine transportiert wird, um mit der Ansaugluft gemeinsam in den Brennraum der Verbrennungskraftmaschine eingeführt zu werden.

Besondere Anforderung stellt die Reinigung von Abgasen eines Diesel-Motors, welche in größerem Umfang nicht verbrannte Kohlenstoffpartikel, häufig auch Rußpartikel genannt, aufweisen. Ein wichtiges Ziel der Abgasreinigung ist, diese Kohlenstoff- bzw. Rußpartikel aus dem Abgas eines Diesel-Motors zu entfernen. Auch bei der Rückführung von Abgas in die Verbrennungskraftmaschine können sich Rußpartikel negativ auswirken. Ziel einer Vorrichtung zum Abfangen von Partikeln zwischen Abgasleitung und Abgasrückführleitung ist es deswegen, die Rückführung von Kohlenstoff- bzw. Rußpartikeln zu verhindern, sowie gegebenenfalls auch andere Festkörper zurückzuhalten.

Teilweise werden in Abgasleitungen auch so genannte Rußabbrennfilter eingesetzt, um Rußpartikel aus dem Abgas zu entfernen. Diese Rußabbrennfilter sind häufig aus keramischen Werkstoffen gefertigt. Häufig werden poröse, gesinterte Keramikfilter eingesetzt ("wall flow filter"). Keramikfilter zeichnen sich ohnehin schon durch eine große Sprödigkeit aus. Durch die unterschiedlichen Temperaturen beim Einsatz in einer Abgasleitung wird dieses Verhalten weiter unterstützt. Es kann leicht passieren, dass sich aus einem Keramikfilter oder einer den Keramikfilter umgebenden Lagermatte kleine Partikel lösen. Werden solche Festkörper durch eine Abgasrückführleitung zurück in den Brennraum einer Verbrennungskraftmaschine oder in einen Abgasturbolader geführt, können sie dort erheblichen Schaden anrichten. Die keramischen Partikel verhalten sich dort wie Schmirgelkörper und können so zu erheblichem Verschleiß an Motorbauteilen oder an Teilen eines Turboladers führen.

Eine in der Abgasrückführleitung angeordnete Filtereinrichtung ist in der Lage, Partikel aus dem zurückgeführten Abgas zu entfernen. Nachteil einer solchen Filtereinrichtung ist jedoch, dass diese durch die Partikel verstopfen kann. Einmal von einer solchen Filtereinrichtung abgefangene Partikel werden durch das nachströmende Abgas weiter in der Filtereinrichtung gehalten. Dadurch können sich die Eigenschaften der Filtereinrichtung erheblich ändern. Die Durchlässigkeit des Filters reduziert sich beispielsweise, so dass ein unerwünschtes Druckgefälle über den Filter entstehen kann. Druckgefälle und Durchlässigkeit haben wiederum Einfluss auf die Menge des zurückgeführten Abgases. Zur Aufrechterhaltung von über die Zeit konstanten Filtereigenschaften ist somit eine regelmäßige Reinigung der Filtereinrichtung notwendig.

Um eine regelmäßige Reinigung der Filtereinrichtung zu umgehen, ist aus der DE - A1 - 38 33 957 bekannt, einen Abgasfiltereinsatz direkt in der Abzweigstelle zwischen einer Abgasleitung und der Abgasrückführleitung anzuordnen. Der Abgasfiltereinsatz ist dabei so angeordnet, dass die Oberfläche parallel zur Strömungsrichtung des Hauptabgasstroms verläuft. Weiter wird dort angegeben, dass der Abgasfiltereinsatz aus einer porösen Sinterkeramik oder aus einem Sintermetall herzustellen ist. Eine typische Porosität für eine solche Filtereinrichtung kann zwischen 0,1 und 10 Mikrometer betragen.

Aus der WO - A1 - 2007/110170 ist zudem bekannt, eine Querschnittserweiterung in einer Abgasrückführleitung vorzusehen, in die eine Sieblage integriert ist. Die Sieblage hat - im Gegensatz zu einem Filter - einen scharfen Trenngrad für die Partikel, so dass nur Partikel ab einer vorgegebenen Größe (entsprechend der Maschengröße des Siebes) zurückgehalten werden. Gleichermaßen kann mit der dort vorgeschlagenen Lösung ein wiederholter (schlagartiger) Kontakt zwischen den großen Partikeln und der robusten Sieblage erreicht werden, so dass diese großen Partikel ggf. noch zerkleinert werden.

Auch wenn sich die vorstehenden Konzepte teilweise schon sehr gut bewährt haben, besteht weiterhin das Bedürfnis nach einer Verbesserung. Insbesondere genügen die bekannten Konzepte noch nicht ausreichend den Anforderungen an die Integrierung solcher Abfangvorrichtungen für Partikel in Abgasrückführsysteme, so dass z. B. der Einsatzort häufig nicht frei wählbar ist, der Montageaufwand solcher Abfangvorrichtungen in Abgasleitungen zu groß ist und/oder keine preiswertere Herstellung der Abfangvorrichtungen für den Einsatz in der Serienfertigung für Kraftfahrzeuge möglich ist.

Hiervon ausgehend, ist es Aufgabe der hier vorliegenden Erfindung, die im Zusammenhang mit dem Stand der Technik geschilderten technischen Probleme weiter zu lindern. Insbesondere soll eine Vorrichtung angegeben werden, mit der eine flexiblere Wahl des Einsatzortes in einem Abgassystem ermöglicht wird, ebenso wie eine einfache Montage mit möglichst wenigen Fügeprozessen. Gleichzeitig soll eine besonders preiswerte Herstellung der Abfangvorrichtungen für den Einsatz in der Serienfertigung für Kraftfahrzeuge gewährleistet werden.

Diese Aufgaben werden gelöst mit einer Vorrichtung gemäß den Merkmalen des Patentanspruchs 1. Weitere vorteilhafte Ausgestaltungen der Vorrichtung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die erfindungsgemäße Vorrichtung ist ein Hohlkörper, welcher ein Sieb, ein Gewebe oder ein Filtervlies ist, zum Abfangen von Partikeln mit zumindest einer wenigstens teilweise durchlässigen Wandung, die sich zwischen zwei zumindest teilweise gegenüberliegenden Öffnungen und um eine erste Längsrichtung erstreckt. Weiter hat der Hohlkörper eine primäre Querschnittsform, die eine erste Querschnittsfläche definiert. Zudem definiert zumindest eine der Öffnungen eine zweite Querschnittsfläche. Es ist nun bestimmt, dass die zweite Querschnittsfläche größer als die erste Querschnittsfläche ist, so dass der Hohlkörper im Randbereich nahe der mindestens einen Öffnung aufgeweitet ist.

Ein derartiger Hohlkörper ist ein Sieb, Gewebe, Filtervlies oder ähnliches. Dieser kann insbesondere zwischen einer Abgasleitung und einer Abgasrückführleitung positioniert werden. Die zumindest teilweise durchlässige Wandung kann dabei beispielsweise den Zugang zur Abgasrückführleitung abdecken. Ein Abgashauptstrom kann dann den Hohlkörpers entlang der ersten Längsrichtung von einer Öffnung zur anderen Öffnung passieren, während ein Teilstrom des Abgases durch die gasdurchlässige Wandung des Hohlkörpers und von hieraus in eine Abgasrückführleitung gelangt.

Der Hohlkörper weist eine "primäre" Querschnittsform auf. Damit soll ausgedrückt sein, dass der Hohlkörper über mindestens 50 % der Erstreckung in Richtung der ersten Längsrichtung diese "primäre" Querschnittsform aufweist, insbesondere über zumindest 80 % der Erstreckung in Richtung der ersten Längsrichtung. Bevorzugt liegt diese "primäre" Querschnittsform also zwischen zwei Randbereichen des Hohlkörpers und prägt das Aussehen des Hohlkörpers maßgeblich. Als "primäre" Querschnittsform kommen insbesondere folgende Formen in Betracht: Kreis, Vieleck, Vielzack, Oval.

Die Wandung stellt mit anderen Worten die Umfangsfläche des Hohlkörpers dar und/oder begrenzt die primäre Querschnittsform beziehungsweise die erste Querschnittsfläche und zweite Querschnittsfläche. Grundsätzlich ist eine einzelne Wandung (aus einem einzelnen Material(-Verbund)) bevorzugt, ggf. kann die Wandung aber auch mit mehreren (konzentrischen und/oder aneinander anliegenden und/oder miteinander verbundenen) Lagen aufgebaut sein. Die hier angesprochenen Querschnittsflächen werden durch die am nächsten hin zur ersten Längsrichtung positionierten Wandung bzw. Lage definiert.

Bevorzugt haben beide Öffnungen eine zweite Querschnittsfläche, die größer ist als die erste Querschnittsfläche. Besonders bevorzugt weisen beide Öffnungen eine gleich große und/oder gleich geformte (z. B. kreisförmige) zweite Querschnittsfläche auf. Ein Übergang von der ersten Querschnittsfläche der primären Querschnittsform zu der zweiten Querschnittsfläche der Öffnung(en) ist bevorzugt als Querschnittserweiterung ausgestaltet, wobei sich die Querschnittsfläche in einem Übergangsbereich hin zur Öffnung kontinuierlich erweitert.

Die Aufweitung des Hohlkörpers im Randbereich nahe der mindestens einen Öffnung ermöglicht insbesondere einen vereinfachten Fügeprozess des Hohlkörpers hin zur (rohrförmigen) Abgasleitung. Dies betrifft insbesondere das Fügen mittels Schweißen. Auf diese Weise kann einerseits auf Kragen, Umbördelungen, Eindellungen, etc. der Abgasleitung verzichtet werden, die zuvor zur schweißtechnischen Anbindung solcher Abgasreinigungseinheiten benötigt wurden. Nunmehr kann der so geformte Hohlkörper in einen (glatten) Abschnitt der Abgasleitung eingesetzt und verschweißt werden. Die primäre Querschnittsform ist gleichzeitig von der Schweißstelle entfernt und wird beim Fügeprozess nicht beschädigt. Durch Form des Hohlkörpers mit beidseitigen Öffnungen kann zudem eine exakte Ausrichtung in der Abgasleitung erfolgen.

Der Hohlkörper kann zudem vorteilhaft weitergebildet werden, wenn die zumindest teilweise durchlässige Wandung sich entlang der Längsrichtung zumindest teilweise erstreckende Erhebungen und Vertiefungen mit einer Höhe aufweist. Mit der "Höhe" ist hier beispielsweise ein Höhenunterschied zwischen einer Erhebung und einer benachbarten Vertiefung beschrieben. Die Erhebungen und Vertiefungen sind insbesondere (nur) im Bereich der primären Querschnittsform vorgesehen. Die Erhebungen und Vertiefungen ergeben typischerweise eine Art Wellung in Umfangsrichtung. Diese Wellung kann beispielsweise auch gezackt, in Form von aneinander grenzenden Halbkreisen, gestuft und/oder sinusförmig ausgeprägt sein.

Die gasdurchlässige Wandung wirkt insbesondere wie ein Sieb, das Partikel zurückhält, welche in einer Abgasströmung enthalten sind, weil diese größer sind als eine Maschenweite des Siebes. Damit der Strömungswiderstand für das zurückgeführte Abgas durch die Wandung hindurch nicht zu groß wird und gleichzeitig die Wandung im Betrieb durch zurückgehaltene Partikel aus dem Abgas nicht verstopft, wird hier eine relativ große Oberfläche der Wandung bereitgestellt. Durch die Erhebungen und Vertiefungen kann die Oberfläche der Wandung entsprechend den jeweiligen Anforderungen vergrößert werden.

Wie bereits ausgeführt, durchströmt Abgas den Hohlkörper regelmäßig von einer Öffnung zur anderen Öffnung entlang der ersten Längsrichtung. Da sich die Erhebungen und Vertiefungen bei der hier beschriebenen bevorzugten Ausführungsform des Hohlkörpers in Richtung der Längsrichtung erstrecken, durchströmt auch die Abgasströmung die Erhebungen und Vertiefungen längs und spült dabei insbesondere in den Vertiefungen abgelagerte Partikel effektiv aus den Vertiefungen heraus. Insbesondere, wenn beide Öffnungen des Hohlkörpers eine sich gegenüber der ersten Querschnittsfläche erweiterte zweite Querschnittsfläche aufweisen, können Partikel, die sich innen in Vertiefungen des Hohlkörpers abgelagert haben, effektiv aus dem Hohlkörper hinaus geblasen werden. Gegebenenfalls kann so sogar eine (dauerhafte) Anlagerung von Partikeln im Bereich dieser Vertiefungen vermieden werden, weil der Hohlkörper keine Zonen aufweist, die in einem Strömungsschatten liegen. Damit wird erreicht, dass nur mit sehr keinen Partikeln behaftetes Abgas in die Abgasrückführung einströmt und die größeren Partikel in entsprechenden Reinigungselementen des nachfolgenden Abgassystems umgewandelt oder gespeichert werden.

Weiterhin ist vorteilhaft, wenn sich die primäre Querschnittsform des Hohlkörpers um eine Weite zu der zweiten Querschnittsfläche erweitert und die Weite mindestens 30 % und maximal 300 % der Höhe beträgt. Mit "Höhe" ist hier wiederum der Abstand von benachbarten Erhebungen und Vertiefungen gemeint. Wird das Verhältnis kleiner als 30 % gewählt, dann können die Erhebungen und Vertiefungen zu klein (Siebfläche bzw. Ausblaseffekt wird verkleinert) sein und/oder der Abstand der primären Querschnittsform hin zum Außendurchmesser der Abgasleitung kann zu klein sein (Fügeprozess wird erschwert). Andererseits wird die Herstellung eines Hohlkörpers bei Überschreiten des Verhältnisses schwieriger, ebenso kann die (selbsttragende) Stabilität des Hohlkörpers dann zu stark beeinträchtigt werden.

Bevorzugt ist die Ausprägung des Hohlkörpers, wobei dieser im Bereich zumindest einer Öffnung mit einer glatten Wandung ausgeführt ist. Damit sind insbesondere zwei (im Wesentlichen) glatte (ringförmige) Randbereiche um die Öffnungen mit der zweiten Querschnittsfläche gebildet. Zudem könnten die Erhebungen und Vertiefungen im Bereich der primären Querschnittsform zumindest eine (erste konkrete) Höhe aufweisen, welche in einem Übergangsbereich hin zur zweiten Querschnittsfläche abnimmt, bis schließlich an der Öffnung an der zweiten Querschnittsfläche im Wesentlichen keine Erhebungen und keine Vertiefungen vorliegen. Mit "im Wesentlichen keine Erhebungen und Vertiefungen" ist gemeint, dass sehr wohl zusammengepresste sehr flache Erhebungen und Vertiefungen vorliegen können, die jedoch im Vergleich zur den Erhebungen und Vertiefungen im Bereich der primären Querschnittsform keine wesentliche Höhe haben.

Bevorzugt ist weiterhin, wenn der Hohlkörper im Bereich der ersten Querschnittsfläche eine erste Umfangslänge und im Bereich zumindest einer Öffnung eine zweite Umfangslänge aufweist, wobei sich die erste Umfangslänge um maximal 35 % von der zweiten Umfangslänge unterscheidet.

Eine hier betrachtete Querschnittsfläche ist senkrecht zur ersten Längsrichtung angeordnet und wird durch die Wandung des Hohlkörpers definiert. Die Umfangslänge entspricht dem Umfang der Querschnittsfläche bzw. der Wandung im Bereich der Querschnittsfläche.

Diese Umfangslänge sollte sich in den verschiedenen Querschnittsflächen des Hohlkörpers nicht zu sehr unterscheiden, weil der gesamte Hohlkörper bevorzugt aus einer einzigen (siebartigen) Wandung besteht und regelmäßig aus einem zylindrischen Rohling gefertigt werden soll. Bei zu großer Verformung dieses Rohlings wird die Maschenweite der Wandung in unzuverlässiger Weise verändert, so dass uneinheitliche Maschengrößen in der Wandung entstehen können, die dazu führen können, dass zu große Partikel die Wandung passieren können. Ein maximaler Unterschied in der Umfangslänge entlang der gesamten Länge des Hohlkörpers ist ein geeigneter Parameter um dies sicherzustellen.

Weiterhin vorteilhaft ist der erfindungsgemäße Hohlkörper, wenn der Hohlkörper eine erste Länge und die primäre Querschnittsform eine zweite Länge aufweist, die sich jeweils entlang der ersten Längsrichtung erstrecken, und wobei die zweite Länge minimal 50 % und maximal 90 % der ersten Länge beträgt.

Die Länge der primären Querschnittsform sollte sich über eine Mindestlänge des Hohlkörpers erstrecken, damit eine ausreichende Fläche an teilweise durchlässiger Wandung zur Abscheidung von Partikeln aus den Abgasen zur Verfügung steht.

Weiterhin vorteilhaft ist der erfindungsgemäße Hohlkörper, wenn die zweite Querschnittsfläche einen ersten Durchmesser und die erste Querschnittsfläche einen äußeren Durchmesser aufweist, und weiter der äußere Durchmesser minimal 30 % und maximal 90 % des ersten Durchmessers beträgt.

Dadurch, dass der äußere Durchmesser der ersten Querschnittsfläche kleiner ist als der erste Durchmesser des Hohlkörpers, findet innerhalb des Hohlkörpers eine Beschleunigung der Abgasströmung statt. Durch diese Beschleunigung der Abgasströmung können Partikel, die sich auf der Wandung des Hohlkörpers und insbesondere an Erhebungen und/oder Vertiefungen der Wandung angelagert haben, besonders effektiv wieder aus dem Hohlkörper hinaus geblasen werden. Gleichzeitig sollte die Verkleinerung der ersten Querschnittsfläche gegenüber der zweiten Querschnittsfläche nicht zu groß sein, weil hierdurch der Strömungswiderstand des Hohlkörpers von einer Öffnung zur anderen Öffnung vergrößert wird.

Weiterhin erfindungsgemäß ist der Hohlkörper, wenn die zumindest teilweise durchlässige Wandung ein Gewebe aus Drahtfilamenten umfasst.

Das Gewebe kann nach Art eines 3-Schaft-Körpergewebes oder 5-Schaft-Körpergewebes (so genanntes "Atlasgewebe", TELA-Gewebe oder Gewebe mit einer 5-Schaft-Atlas-Bindung) ausgeführt sein. Ein derartiges Gewebe weist Kett-Filamente und Schuss-Filamente auf, die in einem Winkel von ca. 90° zueinander verwoben sind. Im Gewebe wird im Folgenden die Richtung entlang der Kett-Filamente als Kettrichtung und die Richtung entlang der Schuss-Filamente als Schussrichtung bezeichnet. Die Verwebung von Kett-Filamenten und Schuss-Filamenten erfolgt bei einem solchen Gewebe derart, dass die Schuss-Filamente jeweils oberhalb vier aufeinander liegender Kett-Filamente und anschließend unterhalb eines einzelnen Kett-Filamentes verlaufen. Dieser Verlauf wiederholt sich für jedes Schuss-Filament über das gesamte Gewebe. Zwei nebeneinander liegende Schuss-Filamente verlaufen jeweils unterhalb unterschiedlicher Kett-Filamente. Bevorzugt ist dabei, dass ein Schuss-Filament jeweils unterhalb des übernächsten Kett-Filamentes verläuft unterhalb dessen das direkt benachbart liegende Schuss-Filament verläuft. Durch diese Anordnung ergibt sich ein regelmäßig wiederholtes schräg zur Schussrichtung und schräg zur Kettrichtung verlaufendes Muster im Gewebe. Das derart gewobene Gewebe ist besonders robust und weist eine relativ glatte Oberfläche auf.

Durch diese Gewebeart kann ein hoher Durchfluss bei gleichzeitiger Stabilität erreicht werden. Hierbei werden (als Kett- und Schuss-Filamente verwendete) Drahtfilamente unterschiedlicher Ausgestaltung eingesetzt, nämlich dickere Kett-Filamente (z. B. 160 µm Filamentdurchmesser) und dünnere Schuss-Filamente (z. B. 150 µm Filamentdurchmesser). Für die Filamentdurchmesser ist jeweils eine Toleranz von +/- 4 µm sinnvoll, so dass Kett-Filamente einen Durchmesser von mindestens 156 µm und maximal 164 µm aufweisen und Schuss-Filamente einen Durchmesser von mindestens 146 µm und maximal 154 µm aufweisen. Im fertigen Gewebe verbiegen sich die dünneren Schuss-Filamente stärker als die dickeren Kett-Filamente. Dies beeinflusst die Form der vorliegenden Maschen.

Ein derartiges Gewebe weist rechteckförmige Maschen auf, die in Schussrichtung eine größere Maschenweite haben als in Kettrichtung. Die Maschenweite sollte in Kettrichtung im Mittel bevorzugt ca. 77 µm betragen. Hierbei ist eine Toleranz von +/- 6 µm sinnvoll. Erfindungsgemäß ist demnach eine mittlere Maschenweiten in Kettrichtung von mindestens 71 µm und maximal 83 µm. In Schussrichtung sollte die Maschenweite im Mittel bevorzugt 149 µm betragen. Hierbei ist eine Toleranz von +/- 10 µm sinnvoll. Erfindungsgemäß ist demnach eine mittlere Maschenweite in Schussrichtung von mindestens 139 µm und maximal 159 µm.

Aus bevorzugter Maschenweite und bevorzugtem Filamentdurchmesser ergibt sich in Kettrichtung eine Maschenzahl von 107 Maschen/Zoll bzw. ca. 41 Maschen/mm [Millimeter] und in Schussrichtung eine Maschenzahl von 85 Machen/Zoll bzw. ca. 33 Maschen/mm [Millimeter].

Darüber hinaus ist es sinnvoll, sowohl in Kettrichtung als auch in Schussrichtung eine maximale Maschenweite zu definieren, um sicherzustellen, dass Partikel ab einer gewissen Größe das Vlies generell nicht passieren können. Als Toleranz für die größte zulässige Maschenweite in Kettrichtung werden 58 µm [Mikrometer] vorgeschlagen. Eine Masche darf in Kettrichtung somit maximal eine Maschenweite von 135 µm aufweisen. Als Toleranz für die größte zulässige Maschenweite in Schussrichtung werden 84 µm vorgeschlagen. Eine Masche darf in Schussrichtung somit maximal eine Maschenweite von 233 µm aufweisen.

Die Eigenschaften eines derartigen Gewebes können beispielsweise mit Hilfe eines Mikroskops überprüft werden. Die Anzahl der Filamente je Längeneinheit in Kettrichtung oder Schussrichtung kann ermittelt werden, indem die Filamente je Längeneinheit gezählt werden. Die mittlere Maschenweite kann dann bestimmt werden, indem der Filamentdrahtdurchmesser von der Teilung (Abstand zweier Filamente im Vlies) abgezogen wird.

Die größte zulässige Maschenweite gibt zumindest teilweise die Filterdurchlässigkeit vor. Diese kann mit Hilfe eines Kugeldurchlasstestes bestimmt werden. Als Kugeldurchlass wird die größte Öffnung der Maschen in einem Gewebe (Vlies) bezeichnet. Eine exakt runde Kugel kann das Gewebe noch passieren, eine Größere wird zurückgehalten. Aus der Definition ergibt sich, dass bei einer rechteckigen Masche die kleinere der beiden Maschenweiten (Maschenweite in Kettrichtung) den Kugeldurchlass wesentlich bestimmt. Der zulässige Kugeldurchmesser bei einem Test mit dem hier vorgeschlagenen Gewebe sollte zwischen 140 µm und 180 µm, vorzugsweise zwischen 150 µm und 170 µm und insbesondere zwischen 155 µm und 160 µm liegen. Der zulässige Kugeldurchlass ist damit größer als die oben angegebene Maschenweite in Kettrichtung. Dies ist der Fall, weil aufgrund der gewebten Struktur des Gewebes und der Filamentdrahtdurchmesser im Verhältnis zu den Maschenweiten sich schräg zur Gewebeebene (insbesondere nicht orthogonal zur aus Kettrichtung und Schussrichtung aufgespannten Vliesebene) bei vorgegebener Maschenweite leicht vergrößerte Durchtrittsöffnungen gegenüber der definierten Maschenweite ergeben.

Die Dicke des Gewebes sollte zwischen 0,4 und 0,5 mm liegen und vorzugsweise ca. 0,44 mm betragen. Das Gewebe sollte eine Luftdurchlässigkeit zwischen minimal 4000 1/m²s und maximal 8000 1/m²s, vorzugsweise zwischen minimal 5000 1/m²s und maximal 7000 1/m²s und insbesondere zwischen minimal 5500 1/m²s und maximal 6000 1/m²s aufweisen, wenn der über das Gewebe anliegende Druckunterschied 2 mbar beträgt.

Für die Weiterverarbeitung sollte das Gewebe frei von Ölfilmen, Hilfsstoffen und anderen Verunreinigungen sein.

Die Drahtfilamente sind in der verwendeten Form des Gewebes bevorzugt miteinander versintert, also insbesondere nicht miteinander verschweißt.

Für den Fall, dass das Gewebe als Wandung eines Hohlkörper nach Art eines Siebes verwendet ist, kann es zumindest durch einen der folgenden Parameter charakterisiert werden:
- Siebfläche von mindestens 50 cm² pro 1,0 Liter Hubraum der Verbrennungskraftmaschine;
- Aufbau (nur) mit 2 verschiedenen Arten von metallischen Drahtfilamenten mit unterschiedlicher Dicke, die mit verschiedener Orientierung in einem Vlies mittels einer Sinterverbindung verbunden sind;
- Trenngrad des Siebes von mindestens 0,05 mm, insbesondere 0,1 mm oder sogar 0,25 mm (Partikel mit einem kleineren Durchmesser durchströmen das Sieb regelmäßig);
- Wandungsdicke zwischen 0,3 und 1 mm, insbesondere zwischen 0,4 und 0,5 mm,
- Material der Wandung (Draht, Drahtfilamente, etc.) mit der Material-Nr. 14841 gemäß deutschem Stahlschlüssel.

Die Maschenweite des Siebes (und/oder des vorstehend beschriebenen Gewebe) liegt bevorzugt im Bereich kleiner 0,3 mm, insbesondere kleiner 0,2 mm und ganz besonders bevorzugt kleiner 0,15 mm. Dabei sollte die Maschenweite gleichermaßen bevorzugt zumindest 0,05 mm (Millimeter) betragen.

Auch vorteilhaft ist der Hohlkörper, wenn die zumindest teilweise durchlässige Wandung zumindest teilweise mit einer katalytisch wirksamen Beschichtung versehen ist. Durch eine derartige Beschichtung auf der Wandung kann eine Umsetzung von Partikeln, welche sich auf der Wandung abgelagert haben, erfolgen.

Weiterhin wird eine Abgasbehandlungsvorrichtung, aufweisend eine Abgasleitung mit einer zweiten Längsrichtung und einer dritten Querschnittsfläche, vorgeschlagen, wobei wenigstens ein erfindungsgemäßer Hohlkörper, dessen zweite Querschnittsfläche (im Wesentlichen) der dritten Querschnittsfläche entspricht, in der Abgasleitung angeordnet ist, und weiter die Wandung des Hohlkörpers einen Eingang zu einer Abgasrückführleitung von der Abgasleitung abgrenzt.

Besonderes bevorzugt wird die Erfindung in einem Kraftfahrzeug eingesetzt, das eine Verbrennungskraftmaschine und eine Abgasbehandlungsvorrichtung mit einer Abgasleitung sowie einer Abgasrückführleitung zur Führung von Abgasen aus der Abgasbehandlungsvorrichtung zurück zu der Verbrennungskraftmaschine aufweist, wobei die Abgasrückführleitung von der Abgasleitung durch einen erfindungsgemäßen Hohlkörper abgegrenzt ist.

Die für den erfindungsgemäßen Hohlkörper geschilderten Ausgestaltungen und Vorteile sind in analoger Weise auf die erfindungsgemäße Abgasbehandlungsvorrichtung und das erfindungsgemäße Kraftfahrzeug anwendbar und übertragbar.

Die Erfindung sowie das technische Umfeld und eine besonders bevorzugte Herstellung des erfindungsgemäßen Gegenstandes werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ansicht einer ersten Ausführungsvariante eines erfindungsgemäßen Hohlkörpers,
- Fig. 2:: eine zweite Ansicht einer ersten Ausführungsvariante eines erfindungsgemäßen Hohlkörpers,
- Fig. 3:: ein Kraftfahrzeug aufweisend eine erfindungsgemäße Abgasbehandlungsvorrichtung und einen erfindungsgemäßen Hohlkörper,
- Fig. 4:: ein Werkzeug zur Herstellung eines erfindungsgemäßen Hohlkörpers,
- Fig. 5:: eine Ausgestaltung eines Gewebes für den Hohlkörper,
- Fig. 6:: eine weitere Ausführungsvariante eines erfindungsgemäßen Hohlkörpers, und
- Fig. 7:: eine zusätzliche Ausführungsvariante eines erfindungsgemäßen Hohlkörpers.

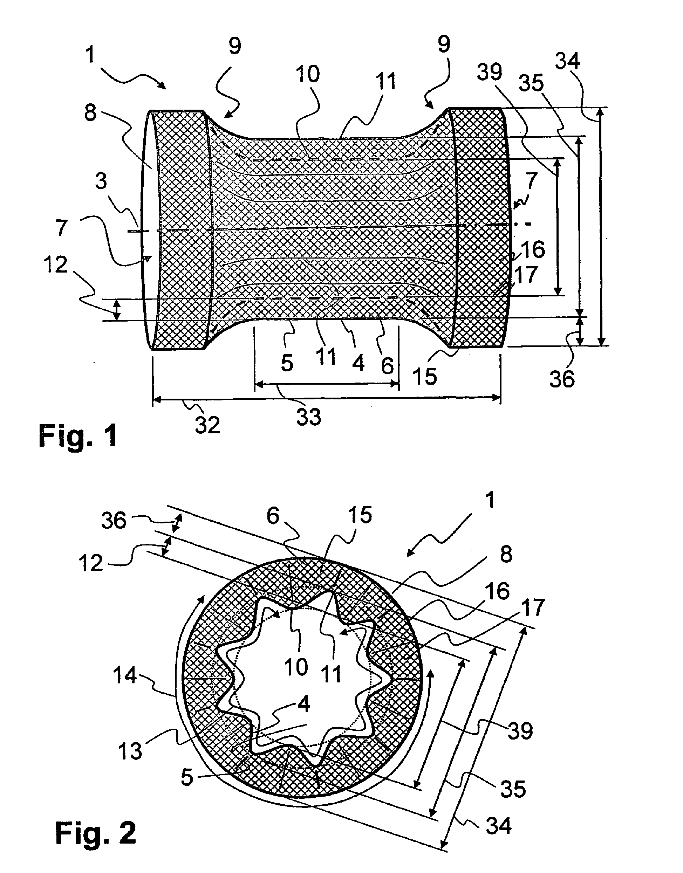

Die Fig. 1 und die Fig. 2 zeigen verschiedene Ansichten einer ersten Ausführungsvariante eines erfindungsgemäßen Hohlkörpers 1. Der Hohlkörper 1 weist eine erste Längsrichtung 3 auf. Weiterhin hat der Hohlkörper 1 zwei (gleichartig ausgeprägte) Öffnungen 7, an denen und in deren Nähe der Hohlkörper 1 eine zweite Querschnittsfläche 8 aufweist. Insgesamt hat der Hohlkörper 1 entlang der ersten Längsrichtung 3 eine erste Länge 32. Zwischen den beiden Öffnungen 7 hat der Hohlkörper 1 eine primäre Querschnittsform 4 mit einer ersten Querschnittsfläche 5. Die erste Querschnittsfläche 5 ist kleiner als die zweite Querschnittsfläche 8.

Im Bereich der ersten Querschnittsfläche 5 und der primären Querschnittsform 4 weist der Hohlkörper 1 zudem Erhebungen 10 und Vertiefungen 11 auf. Die primäre Querschnittsfläche 5 geht in den Übergangsbereichen 9 in der Nähe der Öffnungen 7 in die zweite Querschnittsfläche 8 über. Die Erhebungen 10 und die Vertiefungen 11 haben eine Höhe 12. Die zweite Querschnittsfläche 8 bzw. die Öffnungen 7 weisen einen ersten Durchmesser 34 auf, der gemeinsam mit der ersten Länge 32 die maximalen äußeren Abmaße des Hohlkörpers 1 definieren. Die primäre Querschnittsform 4 hat einen äußeren Durchmesser 35 und einen inneren Durchmesser 38. Zwischen dem äußeren Durchmesser 35 und dem inneren Durchmesser 38 befinden sich die Erhebungen 10 und die Vertiefungen 11. Die Vertiefungen 11 berühren regelmäßig den äußeren Durchmesser 35, während die Erhebungen 10 den inneren Durchmesser 38 berühren. Der äußere Durchmesser 35 und der innere Durchmesser 38 unterscheiden sich durch die doppelte Höhe 12 der Erhebungen 10 und Vertiefungen 11.

Die primäre Querschnittsform 4 erstreckt sich über eine zweite Länge 33 entlang der ersten Längsrichtung 3 des Hohlkörpers 1. Der äußere Durchmesser 35 und die erste Querschnittsfläche 5 treten gegenüber dem ersten Durchmesser 34 und der zweiten Querschnittsfläche 8 um die Weite 36 zurück. Der erste Durchmesser 34 und der äußere Durchmesser 35 unterscheiden sich durch die doppelte Weite 36. Die Wandung 6 des Hohlkörpers 1 umfasst ein Gewebe 15, welches aus Drahtfilamenten 16 aufgebaut ist. Diese Drahtfilamente 16 können eine (katalytisch aktive) Beschichtung 17 aufweisen.

In Fig. 2 sind zusätzlich die erste Umfangslänge 13 und die zweite Umfangslänge 14 zu sehen. Die zweite Umfangslänge 14 erstreckt sich entlang der Wandung 6 des Hohlkörpers 1 im Bereich der zweiten Querschnittsfläche 8 bzw. der Öffnung 7. Die erste Umfangslänge 13 erstreckt sich entlang der Wandung 6 des Hohlkörpers 1 im Bereich der primären Querschnittsform 4 bzw. der ersten Querschnittsfläche 5.

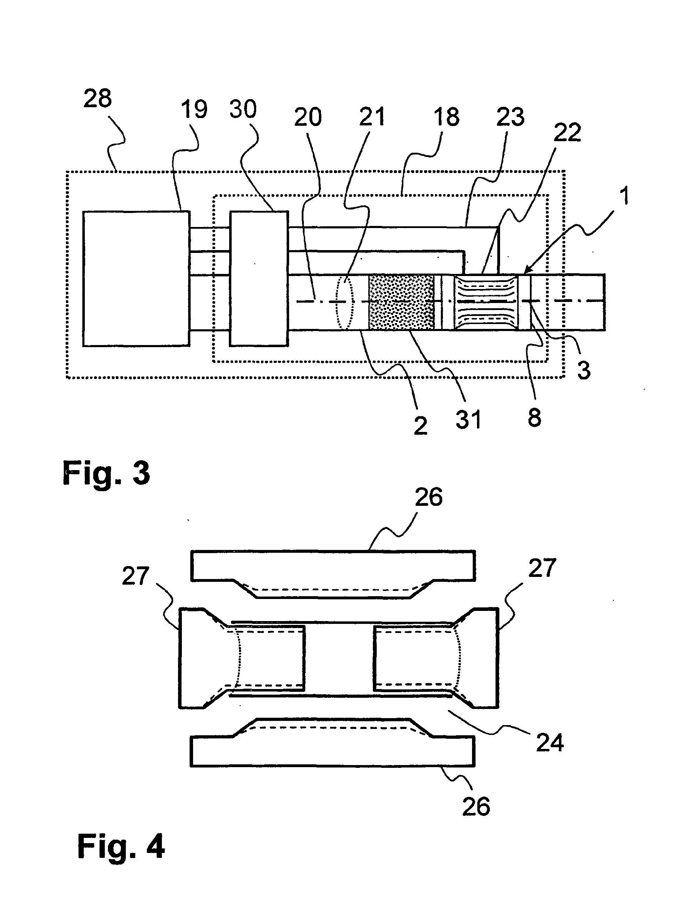

Fig. 3 zeigt ein Kraftfahrzeug 28, aufweisend eine Verbrennungskraftmaschine 19 sowie eine Abgasleitung 2, die sich von der Verbrennungskraftmaschine 19 ausgehend erstreckt. An der Abgasleitung 2 ist eine Abgasbehandlungsvorrichtung 18 angeordnet. Diese Abgasbehandlungsvorrichtung 18 weist einen keramischen Filter 31 sowie einen erfindungsgemäßen Hohlkörper 1 auf. Im Bereich des erfindungsgemäßen Hohlkörpers 1 in der Abgasleitung 2 ist ein Eingang 22 in eine Abgasrückführleitung 23 abgebildet. Abgas, welches durch den Hohlkörper 1 in den Eingang 22 der Abgasrückführleitung 23 strömt, gelangt in den Turbolader 30, welcher von Abgasen, welche die Abgasleitung 2 durchströmen, angetrieben wird. Von dem Turbolader 30 komprimiertes Abgas gelangt weiter zur Verbrennungskraftmaschine 19. Die Abgasleitung 2 hat eine zweite Längsrichtung 20 und eine dritte Querschnittsfläche 21. Die dritte Querschnittsfläche 21 entspricht im Wesentlichen der zweiten Querschnittsfläche 8 des Hohlkörpers 1. Die erste Längsrichtung 3 des Hohlkörpers 1 und die zweite Längsrichtung 20 der Abgasleitung 2 verlaufen koaxial und die zweite Querschnittsfläche 8 des Hohlkörpers 1 und die dritte Querschnittsfläche 21 der Abgasleitung 2 sind aneinander angepasst, so dass der Hohlkörper 1 in die Abgasleitung 2 eingepasst ist. Der Hohlkörper 1 und die Abgasleitung 2 sind mit einer Schweißverbindung oder einer Lötverbindung miteinander stoffschlüssig verbunden. Der Hohlkörper 1 verhindert, dass Partikel, welche sich aus dem keramischen Filter 31 gelöst haben, in die Abgasrückführleitung 23 gelangen und so auch in den Turbolader 30 oder in die Verbrennungskraftmaschine 19 gelangen könnten. Derartige aus einem keramischen Filter 31 abgelöste Partikel können im Turbolader 30 oder in der Verbrennungskraftmaschine 19 erheblichen Schaden verursachen, weil sie dort wie Schmirgelpartikel wirken.

Fig. 4 zeigt ein Werkzeug zur Herstellung eines erfindungsgemäßen Hohlkörpers. Das Werkzeug umfasst mindestens ein Außenformteil 26 sowie mindestens ein Innenformteil 27, durch welche ein zylindrischer Rohling 24 in die Form eines erfindungsgemäßen Hohlkörpers gepresst werden kann.

Alternativ ist auch möglich, dass der Hohlkörper mit seiner primären Querschnittsform über die gesamte Läge gefertigt wird (z. B. mit den Erhebungen und Vertiefungen) und anschließend in den Randbereichen nahe der Öffnungen aufgeweitet bzw. geplättet wird.

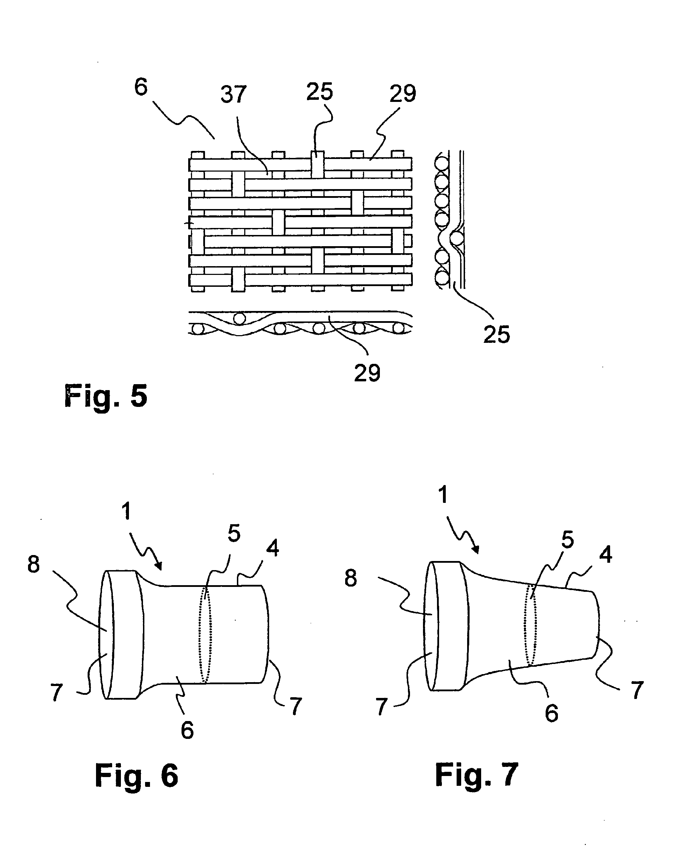

Fig. 5 zeigt in drei Ansichten den Aufbau einer Wandung 6 aus einem metallischen Gewebe nach Art eines Fünfschaftgewebes (sog. Atlasgewebe).

Dabei durchdringen sich die dickeren Kett-Filamente 25 und die dünneren Schuss-Filamente 29 nur nach vier passierten Filamenten. Dabei werden relativ große Maschen 37 gebildet.

Fig. 6 und Fig. 7 zeigen weitere Ausführungsvarianten des erfindungsgemäßen Hohlkörpers 1. In Fig. 6 ist ein Hohlkörper 1 gezeigt, der nur an einer Öffnung 7 eine zweite Querschnittsfläche 8 aufweist, die gegenüber der ersten Querschnittsfläche 5 der primären Querschnittsform 4 erweitert ist. Ein derartiger Hohlkörper kann im Bereich eines Eingangs zu einer Abgasrückführleitung in eine Abgasleitung eingesetzt werden, wobei die Abgasleitung sich in diesem Bereich verjüngt. Fig. 7 zeigt einen Hohlkörper 1, dessen primäre Querschnittsform 4 mit einer veränderlichen ersten Querschnittsfläche 5 ausgeführt ist. Weder der in Fig. 6, noch der in Fig. 7 dargestellte Hohlkörper 1 weisen Erhebungen und Vertiefungen in ihren Wandungen 6 auf.

### Bezugszeichenliste

| | |
|---|---|
| 1 | Hohlkörper |
| 2 | Abgasleitung |
| 3 | erste Längsrichtung |
| 4 | primäre Querschnittsform |
| 5 | erste Querschnittsfläche |
| 6 | Wandung |
| 7 | Öffnung |
| 8 | zweite Querschnittsfläche |
| 9 | Übergangsbereich |
| 10 | Erhebungen |
| 11 | Vertiefungen |
| 12 | Höhe |
| 13 | erste Umfangslänge |
| 14 | zweite Umfangslänge |
| 15 | Gewebe |
| 16 | Drahtfilamente |
| 17 | Beschichtung |
| 18 | Abgasbehandlungsvorrichtung |
| 19 | Verbrennungskraftmaschine |
| 20 | zweite Längsrichtung |
| 21 | dritte Querschnittsfläche |
| 22 | Eingang |
| 23 | Abgasrückführleitung |
| 24 | zylindrischer Rohling |
| 25 | Kett-Filament |
| 26 | Außenform |
| 27 | Innenform |
| 28 | Kraftfahrzeug |
| 29 | Schuss-Filament |
| 30 | Turbolader |
| 31 | keramischer Filter |
| 32 | erste Länge |
| 33 | zweite Länge |
| 34 | erster Durchmesser |
| 35 | zweiter Durchmesser |
| 36 | Weite |
| 37 | Masche |
| 38 | dritter Durchmesser |

## Patentansprüche

1. Hohlkörper (1) zum Abfangen von Partikeln, welcher ein Sieb, ein Gewebe oder ein Filtervlies ist, mit zumindest einer wenigstens teilweise durchlässigen Wandung (6), die sich zwischen zwei zumindest teilweise gegenüberliegenden Öffnungen (7) und um eine erste Längsrichtung (3) erstreckt, wobei der Hohlkörper (1) eine primäre Querschnittsform (4) hat, die eine erste Querschnittsfläche (5) definiert, und zumindest eine der Öffnungen (7) eine zweite Querschnittsfläche (8) definiert, wobei weiter die zweite Querschnittsfläche (8) größer als die erste Querschnittsfläche (5) ist, so dass der Hohlkörper (1) im Randbereich nahe mindestens einer der Öffnungen (7) aufgeweitet ist.

2. Hohlkörper (1) nach Patentanspruch 1, wobei die zumindest teilweise durchlässige Wandung (6) sich entlang der ersten Längsrichtung (3) zumindest teilweise erstreckende Erhebungen (10) und Vertiefungen (11) mit einer Höhe (12) aufweist.

3. Hohlkörper (1) nach Patentanspruch 2, wobei die primäre Querschnittsform (4) sich um eine Weite (36) hin zur der zweiten Querschnittsfläche (8) erweitert und die Weite (36) mindestens 30 % und maximal 300 % der Höhe (12) beträgt.

4. Hohlkörper (1) nach einem der vorhergehenden Patentansprüche, wobei dieser im Bereich zumindest einer Öffnung (7) mit einer glatten Wandung (6) ausgeführt ist.

5. Hohlkörper (1) nach einem der vorhergehenden Patentansprüche, wobei der Hohlkörper (1) im Bereich der ersten Querschnittsfläche (5) eine erste Umfangslänge (13) und im Bereich zumindest einer Öffnung (7) eine zweite Umfangslänge (14) aufweist, wobei sich die erste Umfangslänge (13) um maximal 35 % von der zweiten Umfangslänge (14) unterscheidet.

6. Hohlkörper (1) nach einem der vorhergehenden Patentansprüche, wobei der Hohlkörper (1) eine erste Länge (32) und die primäre Querschnittsform (4) eine zweite Länge (33) aufweist, die sich jeweils entlang der ersten Längsrichtung (3) erstrecken, und wobei sich die zweite Länge (32) minimal 50 % und maximal 90 % der ersten Länge (33) beträgt.

7. Hohlkörper (1) nach einem der vorhergehenden Patentansprüche, wobei die zumindest teilweise durchlässige Wandung (6) ein Gewebe (15) aus Drahtfilamenten (16) umfasst.

8. Abgasbehandlungsvorrichtung (18), aufweisend eine Abgasleitung (2) mit einer zweiten Längsrichtung (20) und einer dritten Querschnittsfläche (21), wobei wenigstens ein Hohlkörper (1) nach einem der vorhergehenden Patentansprüche, dessen zweite Querschnittsfläche (8) der dritten Querschnittsfläche (21) entspricht, in der Abgasleitung (2) angeordnet ist, und weiter die Wandung (6) des Hohlkörpers (1) einen Eingang (22) zu einer Abgasrückführleitung (23) von der Abgasleitung (2) abgrenzt.

9. Kraftfahrzeug (28), aufweisend eine Verbrennungskraftmaschine (19) und eine Abgasbehandlungsvorrichtung (18) mit einer Abgasleitung (2) sowie eine Abgasrückführleitung (23) zur Führung von Abgasen aus der Abgasbehandlungsvorrichtung (18) zurück zur Verbrennungskraftmaschine (19), wobei die Abgasrückführleitung (23) von der Abgasleitung (2) durch einen Hohlkörper (1) nach einem der Patentansprüche 1 bis 7 abgegrenzt ist.

## Claims

1. A hollow body (1) for capturing particles, which is a screen, a fabric or a filter fleece, having at least one at least partially permeable wall (6) which extends between at least two at least partially oppositely situated openings (7) and over a first longitudinal direction (3), wherein the hollow body (1) has a primary cross-sectional shape (4) which defines a first cross-sectional area (5), and at least one of the openings (7) defines a second cross-sectional area (8), wherein furthermore the second cross-sectional area (8) is larger than the first cross-sectional area (5), so that the hollow body (1) is widened in the edge region close to at least one of the openings (7).

2. The hollow body (1) according to claim 1, wherein the at least partially permeable wall (6) has elevations (10) and depressions (11), with a height (12), extending at least partially along the first longitudinal direction (3).

3. The hollow body (1) according to claim 2, wherein the primary cross-sectional shape (4) widens by a width (36) on to the second cross-sectional area (8), and the width (36) amounts to at least 30% and at most 300% of the height (12).

4. The hollow body (1) according to one of the preceding claims, wherein said hollow body is formed with a smooth wall (6) in the region of at least one opening (7).

5. The hollow body (1) according to one of the preceding claims, wherein the hollow body (1) has a first peripheral length (13) in the region of the first cross-sectional area (5) and has a second peripheral length (14) in the region of at least one opening (7), wherein the first peripheral length (13) differs by at most 35% from the second peripheral length (14).

6. The hollow body (1) according to one of the preceding claims, wherein the hollow body (1) has a first length (32) and the primary cross-sectional shape (4) has a second length (33) which each extend along the first longitudinal direction (3), and wherein the second length (32) amounts to at least 50% and at most 90% of the first length (33).

7. The hollow body (1) according to one of the preceding claims, wherein the at least partially permeable wall (6) comprises a fabric (15) composed of wire filaments (16).

8. An exhaust-gas treatment device (18), having an exhaust line (2) having a second longitudinal direction (20) and having a third cross-sectional area (21), wherein at least one hollow body (1) according to one of the preceding claims, the second cross-sectional area (8) of which corresponds to the third cross-sectional area (21), is arranged in the exhaust line (2), and furthermore the wall (6) of the hollow body (1) separates an inlet (22) to an exhaust-gas recirculation line (23) from the exhaust line (2).

9. A motor vehicle (28), having an internal combustion engine (19) and having an exhaust-gas treatment device (18) with an exhaust line (2) and with an exhaust-gas recirculation line (23) for conducting exhaust gases from the exhaust-gas treatment device (18) back to the internal combustion engine (19), wherein the exhaust-gas recirculation line (23) is separated from the exhaust line (2) by a hollow body (1) according to one of claims 1 to 7.

## Revendications

1. Corps creux (1) pour la capture de particules, qui est un tamis, un tissu ou un non-tissé de filtre, avec au moins une paroi au moins partiellement perméable (6), qui s'étend entre deux ouvertures (7) situées au moins partiellement l'une en face de l'autre et autour d'une première direction longitudinale (3), dans lequel le corps creux (1) a une première forme de section transversale (4) qui définit une première surface de section transversale (5), et au moins une des ouvertures (7) définit une deuxième surface de section transversale (8), dans lequel en outre la deuxième surface de section transversale (8) est plus grande que la première surface de section transversale (5), de telle manière que le corps creux (1) soit élargi dans la région de bord à proximité d'au moins une des ouvertures (7).

2. Corps creux (1) selon la revendication 1, dans lequel la paroi au moins partiellement perméable (6) présente des surélévations (10) et des creux (11) de hauteur (12) qui s'étendent au moins partiellement le long de la première direction longitudinale (3).

3. Corps creux (1) selon la revendication 2, dans lequel la première forme de section transversale (4) s'élargit d'une largeur (36) en direction de la deuxième surface de section transversale (8) et la largeur (36) vaut au moins 30 % et au maximum 300 % de la hauteur (12).

4. Corps creux (1) selon l'une quelconque des revendications précédentes, dans lequel celui-ci est réalisé avec une paroi lisse (6) dans la région d'au moins une ouverture (7).

5. Corps creux (1) selon l'une quelconque des revendications précédentes, dans lequel le corps creux (1) présente dans la région de la première surface de section transversale (5) une première longueur périphérique (13) et dans la région d'au moins une ouverture (7) une deuxième longueur périphérique (14), dans lequel la première longueur périphérique (13) se différencie de la deuxième longueur périphérique (14) de 35 % au maximum.

6. Corps creux (1) selon l'une quelconque des revendications précédentes, dans lequel le corps creux (1) présente une première longueur (32) et la première forme de section transversale (4) une deuxième longueur (33), qui s'étendent respectivement le long de la première direction longitudinale (3), et dans lequel la deuxième longueur (32) vaut au minimum 50 % et au maximum 90 % de la première longueur (33).

7. Corps creux (1) selon l'une quelconque des revendications précédentes, dans lequel la paroi au moins partiellement perméable (6) comprend un tissu (15) en filaments de fils (16).

8. Dispositif de traitement de gaz d'échappement (18), comportant une conduite de gaz d'échappement (2), avec une deuxième direction longitudinale (20) et une troisième surface de section transversale (21), dans lequel au moins un corps creux (1) selon l'une quelconque des revendications précédentes, dont la deuxième surface de section transversale (8) correspond à la troisième surface de section transversale (21), est disposé dans la conduite de gaz d'échappement (2), et en outre la paroi (6) du corps creux (1) sépare une entrée (22) vers une conduite de recyclage de gaz d'échappement (23) de la conduite de gaz d'échappement (2).

9. Véhicule automobile (28), comportant un moteur à combustion interne (19) et un dispositif de traitement de gaz d'échappement (18) avec une conduite de gaz d'échappement (2) ainsi qu'une conduite de recyclage de gaz d'échappement (23) pour conduire des gaz d'échappement depuis le dispositif de traitement de gaz d'échappement (18) en retour vers le moteur à combustion interne (19), dans lequel la conduite de recyclage de gaz d'échappement (23) est séparée de la conduite de gaz d'échappement (2) par un corps creux (1) selon l'une quelconque des revendications 1 à 7.
